**Europäisches Patentamt**

**European Patent Office**

**Office européen des brevets**

(11) Veröffentlichungsnummer: **0 120 261**
**B1**

# EUROPÄISCHE PATENTSCHRIFT

(45) Veröffentlichungstag der Patentschrift:
**11.05.88**

(21) Anmeldenummer: **84101524.1**

(22) Anmeldetag: **14.02.84**

(51) Int. Cl.⁴: **B 60 S 1/38**

(54) **Wischvorrichtung für Scheiben von Kraftfahrzeugen.**

(30) Priorität: **19.03.83 DE 3309972**

(43) Veröffentlichungstag der Anmeldung:
**03.10.84 Patentblatt 84/40**

(45) Bekanntmachung des Hinweises auf die Patenterteilung:
**11.05.88 Patentblatt 88/19**

(84) Benannte Vertragsstaaten:
**BE DE FR IT**

(56) Entgegenhaltungen:
**DE - A - 1 430 589**
**DE - A - 2 346 100**
**FR - A - 1 237 303**

(73) Patentinhaber: **ROBERT BOSCH GMBH, Postfach 50,
D-7000 Stuttgart 1 (DE)**

(72) Erfinder: **Brümmer, Dietmar, Hindenburgstrasse 35,
D-7582 Bühlertal (DE)**
Erfinder: **Gartner, Gerhard, Dipl.-Ing. (FH),
Hans-Thoma-Strasse 12, D-7573 Sinzheim (DE)**
Erfinder: **Lorenz, Karl-Heinz, Dalbergstrasse 5,
D-7570 Baden-Baden 23 (DE)**
Erfinder: **Weiler, Paul, Brandrain 27,
D-7594 Kappelrodeck (DE)**

**Beschreibung**

Stand der Technik

Die Erfindung geht aus von einer Wischvorrichtung nach der Gattung des Hauptanspruchs. Es ist schon eine Wischvorrichtung bekannt (DE-A-2 346 100), bei der beide Blendenteile je an einem gelenkig mit dem Druckverteilungsbügel verbundenen Krallenbügel gehalten sind, der seinerseits ein auf der Scheibe aufliegendes Wischelement fasst. Während der Pendelbewegung ändert sich Höhe des Wischblatts, gemessen von einem zwischen den Krallen eines Krallenbügels zum Anlenkpunkt am Druckverteilungsbügel umso mehr, je stärker die Scheibe gekrümmt ist. Diese Tatsache muss auch bei der Bemessung der Blendenhöhe berücksichtigt werden, damit diese beim Überqueren solcher Krümmungen die Scheibe nicht zerkratzt. Deshalb ergibt sich zwangsläufig ein relativ grosser Luftspalt zwischen Scheibe und Blendenunterkante, wenn das Wischblatt weniger stark gekrümmte Scheibenbereiche überstreicht, was wiederum die Abhebeneigung des Wischblatts erhöht.

Vorteile der Erfindung

Die erfindungsgemässe Mischvorrichtung mit den kennzeichnenden Merkmalen des Hauptanspruchs hat demgegenüber den Vorteil, dass die der Scheibe zugewandte Blendenkante in allen Pendel-Zwischenstellungen sich so nahe an der Scheibe befindet, dass auf der vom Fahrtwind abgewandten Seite der Blende ein Unterdruck aufgebaut wird. In dessen Bereich befindet sich die Wischleiste, die deshalb nicht oder nur in geringerem Masse vom Fahrtwind angeströmt werden kann, so dass das, durch das direkte Anströmen der Wischleiste begünstigte, unerwünschte Abheben des Wischblatts von der Scheibe vermieden wird. Weiter wird über den am Wischerarm befestigte Blendenteil über die Wischblattbefestigung dem gesamten Wischblatt eine neben der von der üblichen Andrückfeder unabhängige, zusätzliche Anlagekraft mitgeteilt, während der am Druckverteilungsbügel angeordnete Blendeteil eine zusätzliche Anlagekraft nur auf den besonders gefährdeten, aussenliegenden Wischblattabschnitt ausübt. Da sich der am Wischerarm befestigte Blendenteil über die innenliegenden, weniger stark gekrümmten Scheibenbereiche bewegt, ist eine gelenkige Anpassung dieses Blendenteils an die Scheibe nicht erforderlich. Der aussenliegende Blendenteil macht dagegen die Anpassungsbewegung des Wischblatts mit, wenn dieses die stärker gekrümmten Aussenbereiche der Scheibe überstreicht.

Durch die in den Unteransprüchen aufgeführten Massnahmen sind vorteilhafte Weiterbildungen und Verbesserungen der im Hauptanspruch angegebenen Wischvorrichtung möglich.

Zeichnung

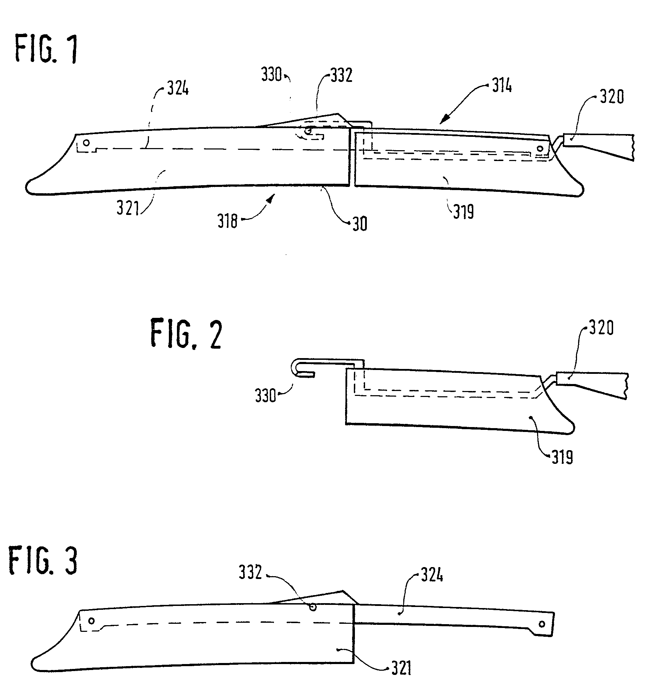

Ein Ausführungsbeispiel der Erfindung ist in der Zeichnung dargestellt und in der nachfolgenden Beschreibung näher erläutert. Es zeigen Figur 1 eine Ansicht eines gemäss der Erfindung aufgebauten Wischhebels mit geteilter Blende, Figur 2 den Wischerarm des Wischhebels gemäss Figur 1 in Ansicht und Figur 3 den Tragbügel des Wischhebels gemäss Figur 1 in Ansicht.

Beschreibung des Ausführungsbeispiels

Die erfindungsgemässe Ausgestaltung ist in den Figuren 1 bis 3 dargestellt. Wie die Zusammenstellungszeichnung gemäss Figur 1 für den Wischhebel 314 zeigt, weist dieser einen Wischerarm 320 auf, dessen freies Ende mit einem Anschlusshaken 330 versehen ist, der einen Anschlussbolzen 332 des Wischblatts umgreift, welcher im Druckverteilungsbügel 324 befestigt ist. Weiter zeigt Figur 1, dass der Wischhebel 314 mit einer Blende 318 ausgestattet ist. Die Blende ist zweigeteilt, wobei ein Blendenteil 319 mit dem Wischerarm 320 und das andere Blendenteil 321 mit dem Druckverteilungsbügel 324 verbunden sind. Die beiden Blendenteile 319 und 321 sind mit Abstand voneinander angeordnet. Das eine Blendenteil 319, das am Wischerarm 320 befestigt ist, kann als separates Bauteil ausgebildet und mit einem stangenförmigen Teil des Wischerarmes 320 verbunden sein. In bestimmten Fällen ist jedoch auch eine einstückige Ausbildung des Blendenteils 319 mit dem Wischerarm 320 von Vorteil. Dabei ist es denkbar, das gesamte Bauelement 319, 320 aus Leichtmetall-Druckguss zu fertigen. Zweckmässig ist dieser stangenförmige Teil des Wischerarms 320 so gekröpft, dass ein Mittelabschnitt des Wischerarms 320 gut mit dem Blendenteil 319 verbunden werden kann. Weiter ist der Wischerarm an seinem freien, den Druckverteilungsbügel 324 haltenden Ende von der Scheibe weggekröpft. Die Verbindung zwischen Wischerarm 320 und dem Blendenteil 319 kann durch Kleben, Rasten, Verklemmen oder dergleichen erfolgen. Es ist aber auch denkbar, wenn der Wischerarm 320 oder die Stange des Wischerarms 320 aus einem Kunststoff hergestellt ist, diese einstückig mit dem Wischerarm auszubilden, mit diesem zu verkleben oder zu verschweissen.

Wie insbesondere die Figur 1 zeigt, ist die der Scheibe 10 zugewandte Seite 30 der Blende 318 annähernd der Scheibenkrümmung angepasst. Diese Seite 30 reicht in allen Fällen bis nahe an die Scheibe heran. Die der Windströmung zugewandte Anströmwand ist konkav ausgebildet.

**Patentansprüche**

1. Wischvorrichtung für sphärisch gekrümmte Scheiben von Kraftfahrzeugen, mit einem angetriebenen Wischerarm (330), einem an dessen freien Ende angelenkten Wischblatt mit einem Druckverteilungsbügel (324), der eine auf der Scheibe aufliegende Wischleiste trägt und mit einer an dem aus Wischerarm und Wischblatt gebildeten Wischhebel (314) angeordneten, quer zu ihrer Längserstreckung geteilten, vom Fahrtwind beaufschlagten Blende (318), die sich zumindest teilweise vom Wischhebel zur Scheibe erstreckt, dadurch gekennzeichnet, dass der eine Blendenteil (319) am Wischerarm (320) und der andere Blendenteil (321) am Wischblatt, vorzugsweise am Druckverteilungsbügel (324) des Wischblatts angeordnet ist.

2. Wischvorrichtung nach Anspruch 1, dadurch gekennzeichnet, dass die beiden Blendenteile (319, 321) mit Abstand voneinander angeordnet sind.

3. Wischvorrichtung nach einem der Ansprüche 1 oder 2, dadurch gekennzeichnet, dass der andere Blendenteil (321) mit dem Druckverteilungsbügel (324) einstückig ausgebildet ist.

4. Wischvorrichtung nach einem der Ansprüche 1 bis 3, dadurch gekennzeichnet, dass der Wischerarm (320) an seinem freien, den Druckverteilungsbügel (324) haltenden Endabschnitt von der Scheibe weggekröpft ist.

5. Wischvorrichtung nach einem der Ansprüche 1 bis 4, dadurch gekennzeichnet, dass die der Scheibe (10) zugewandte Seite der Blende (318) wenigstens annähernd der Scheibenkrümmung angepasst ist.

6. Wischvorrichtung nach einem der Ansprüche 1 bis 5, dadurch gekennzeichnet, dass die der Scheibe zugewandte Seite der Blende (318) nahe an die Scheibe heranreicht.

7. Wischvorrichtung nach einem der Ansprüche 1 bis 6, dadurch gekennzeichnet, dass die der Windströmung zugewandte Seite der Blende (318) konkav ausgebildet ist.

8. Wischvorrichtung nach einem der Ansprüche 1 bis 7, wobei an dem Druckverteilungsbügel (324) wenigstens ein die Wischleiste fassender Zwischenbügel angeordnet ist, dadurch gekennzeichnet, dass in Strömungsrichtung gesehen die Blende (318) zumindest wesentliche Bereiche des Zwischenbügels abdeckt indem sie zur Scheibe hin divergiert.

9. Wischvorrichtung nach einem der Ansprüche 1 bis 8, bei der der Wischhebel eine Pendelbewegung von mehr als 100 Grad ausführt, dadurch gekennzeichnet, dass die Wischleiste zwischen zwei im wesentlichen spiegelbildlich angeordneten Blenden (318) angeordnet ist.

## Claims

1. Wiping apparatus for spherically curved windscreens of motor vehicles, with a driven wiper arm (330), a wiping blade articulated at the free end of the latter and with a pressure distributing stay (324), which bears a wiping strip resting on the windscreen, and with a deflector (318), arranged on the wiping lever (314) formed by wiper arm and wiping blade, divided transversely to its longitudinal extent and acted on by the relative wind, which deflector extends at least partly from the wiping lever to the windscreen, characterized in that the one deflector part (319) is arranged on the wiper arm (320) and the other deflector part (321) is arranged on the wiping blade, preferably on the pressure distributing stay (324) of the wiping blade.

2. Wiping apparatus according to Claim 1, characterized in that the two deflector parts (319, 321) are spaced apart.

3. Wiping apparatus according to one of Claims 1 or 2, characterized in that the other deflector part (321) is designed integrally with the pressure distributing stay (324).

4. Wiping apparatus according to one of Claims 1 to 3, characterized in that the wiper arm (320) is angled off away from the windscreen at its free end section holding the pressure distributing stay (324).

5. Wiping apparatus according to one of Claims 1 to 4, characterized in that the side of the deflector (318) facing the windscreen (10) is adapted at least approximately to the windscreen curvature.

6. Wiping apparatus according to one of Claims 1 to 5, characterized in that the side of the deflector (318) facing the windscreen reaches closely up to the windscreen.

7. Wiping apparatus according to one of Claims 1 to 6, characterized in that the side of the deflector (318) facing the wind flow is designed concavely.

8. Wiping apparatus according to one of Claims 1 to 7, at least one intermediate stay, holding the wiping strip, being arranged on the pressure distributing stay (324), characterized in that, seen in the flow direction, the deflector (318) covers at least substantial areas of the intermediate stay by diverging towards the windscreen.

9. Wiping apparatus according to one of Claims 1 to 8, in which the wiping lever executes a swing movement of more than 90 degrees, characterized in that the wiping strip is arranged between two substantially mirror-invertedly arranged deflectors (318).

## Revendications

1. Essuie-glace pour vitre à bombé sphérique de véhicules automobiles comportant un bras d'essuie-glace (330), une raclette d'essuie-glace articulée à son extrémité libre avec un étrier de répartition de pression (324) qui porte un rebord d'essuyage et un écran (318) appliqué sur la vitre disposée sur le bras d'essuie-glace formé de ce dernier et de la raclette répartis perpendiculairement à son prolongement longitudinal qui s'étend au moins partiellement du bras d'essuie-glace à la vitre, caractérisé en ce qu'une des parties de l'écran (319) est disposée sur le bras d'essuie-glace (320) et l'autre partie (321) sur la raclette, avantageusement sur l'étrier de répartition de pression (324) de la raclette.

2. Essuie-glace selon la revendication 1, caractérisé en ce que les deux parties d'écran (319, 321) sont disposées avec un intervalle entre elles.

3. Essuie-glace selon la revendication 1 ou 2, caractérisé en ce que l'autre partie d'écran (321) est formée de façon monobloc par l'étrier de répartition de pression.

4. Essuie-glace selon l'une des revendications 1 à 3, caractérisé en ce que le bras d'essuie-glace (320) est coudé dans sa section finale portant à son extrémité libre à partir de la vitre, l'étrier de répartition de pression (324).

5. Essuie-glace selon l'une des revendications 1 à 4, caractérisé en ce que le côté de l'écran (318) tourné vers la vitre est adapté au moins approximativement au bombé de la vitre.

6. Essuie-glace selon l'une des revendications 1 à 5, caractérisé en ce que le côté de l'écran (318) tourné vers la vitre s'approche à proximité de la vitre.

7. Essuie-glace selon l'une des revendications 1 à 6, caractérisé en ce que le côté de l'écran (318) tourné du côté du flux d'air est de forme concave.

8. Essuie-glace selon l'une des revendications 1 à 7, où sur l'étrier de répartition de pression (324) est placé un étrier intermédiaire contenant le bord d'essuyage, caractérisé en ce que vu dans le sens du flux d'air, l'écran (318) recouvre au moins pour l'essentiel les zones de l'étrier de répartition de pression tandis qu'il diverge vers la vitre.

9. Essuie-glace selon l'une des revendications 1 à 8, sur lequel le levier d'essuie-glace exécute un mouvement pendulaire de plus de 90 degrés, caractérisé en ce que le rebord d'essuyage est placé entre les écrans (318) disposés essentiellement de façon à former un miroir.

FIG. 1

FIG. 2

FIG. 3

5